# EUROPÄISCHE PATENTANMELDUNG

(11) **EP 3 318 732 A1**
(43) Veröffentlichungstag der Anmeldung: **09.05.2018**
(21) Anmeldenummer: 16197458.9
(22) Anmeldetag: 07.11.2016
(51) Int. Cl.: F01K 23/10, F01K 13/02

(54) **VERFAHREN ZUM BETREIBEN EINES GUD-KRAFTWERKS**

(71) Anmelder: Siemens Aktiengesellschaft, 80333 München (DE)
(72) Erfinder: Borowski, Marc, 47445 Moers (DE); Gobrecht, Edwin, 40885 Ratingen (DE); Heue, Matthias, 44879 Bochum (DE); Migl, Matthias, 80997 München (DE); Schmid, Erich, 90449 Nürnberg (DE)

(57) **Zusammenfassung**

Die Erfindung betrifft ein Verfahren zum Betreiben eines GuD-Kraftwerks (1), wobei das GuD-Kraftwerk (1) eine Gasturbine (2) und eine Dampfturbine (3) aufweist, und wobei zum Abfahren der Gasturbine (2) und der Dampfturbine (3) die Gasturbine (2) und die Dampfturbine (3) derart betrieben werden, dass die Gasturbine (2) und die Dampfturbine (3) zum im Wesentlichen gleichen Zeitpunkt (t1) entlastet sind.

## Beschreibung

Die Erfindung betrifft ein Verfahren zum Betreiben eines GuD-Kraftwerks.

Unter einem GuD-Kraftwerk wird dabei ein Gas-und-Dampf-Kombikraftwerk oder Gas-und-Dampfturbinen-Kraftwerk verstanden, das die Prinzipien eines Gasturbinenkraftwerkes und eines Dampfkraftwerkes kombiniert. Eine Gasturbine dient dabei als Wärmequelle für einen nachgeschalteten Kessel, der wiederum als Dampferzeuger für die Dampfturbine wirkt.

Mit dieser Kombination wird im thermodynamischen Kreisprozess ein höherer Wirkungsgrad erreicht als mit Gasturbinen im offenen Betrieb oder in konventionell befeuerten Dampfkraftwerken. Kombikraftwerke gehören mit elektrischen Wirkungsgraden von bis zu 60 % zu den effizientesten konventionellen Kraftwerken.

Ferner sind derartige Kombikraftwerke im Kraftwerksmanagement sehr flexibel einsetzbar. Aufgrund kurzer Startzeiten und der Möglichkeit schneller Laständerungen sind sie ideale Mittellast-Kraftwerke. Vorrangig werden diese Kraftwerke im Mittellastbereich und bei Bedarf sogar im Bereich des Spitzenstroms betrieben.

Jedoch liefert die Gasturbine unterhalb einer Mindestleistung keine konstante Abgastemperatur. Dies führt beim Abfahren der Gasturbine auch zu einem Absinken der Dampftemperatur. Wird die Dampfturbine dann weiter betrieben führt dies zu einem hohem Lebensdauerverbrauch bzw. Verkürzung der Lebensdauer.

Daher wird die Dampfturbine abgefahren bevor die Gasturbine in den unteren Lastbereich gefahren wird. Für den Zeitraum des Dampfturbinenabfahrvorgangs muss die Gasturbine auf einem konstanten Leistungsniveau verharren. Dies führt - im Vergleich zum Anfahren - zu einem vergleichsweise langen Abfahrprozess. Während des Abfahrens ist ferner der Wirkungsgrad nicht optimal.

Es besteht daher Bedarf daran, zumindest einen Weg aufzuzeigen, wie das Abfahren beschleunigt werden kann.

Erfindungsgemäß werden bei einem Verfahren zum Betreiben eines GuD-Kraftwerks mit einer Gasturbine und eine Dampfturbine die Gasturbine und die Dampfturbine derart betrieben, dass die Gasturbine und die Dampfturbine im Wesentlichen zum gleichen Zeitpunkt entlastet sind.

Die Erfindung macht sich dabei den Umstand zu Nutze, dass thermische Kapazitäten des GuD-Kraftwerks, wie z.B. im Rohrleitungssystem umgewälzter Dampf und Gas, aber auch in den Wandungen von Rohrleitungen, die Komponenten des GuD-Kraftwerks miteinander verbinden, ausreichend sind, um einen raschen Temperaturabfall zu verhindern, wenn die Gasturbine abgefahren wird. Mit anderen Worten, im GuD-Kraftwerk gespeicherte Wärmeenergie verhindert ein sofortiges Absinken der Dampftemperatur bei einem Betrieb unterhalb der Mindestleistung des Gasturbine. So kann innerhalb dieses Zeitfensters, das sich von Beginn des Abfahrvorgangs bis zum Abfall der Dampftemperatur auf einen unteren Grenzwert erstreckt, die Gastturbine zeitgleich mit der Dampfturbine abgefahren werden. So kann das Abfahren beschleunigt werden. Von Vorteil, aber keine Voraussetzung ist hierbei, dass die Gasturbine eine hohe Dynamik aufweist.

Bevorzugt ist der Gasturbine ein Gasturbinen-Leistungsregler und der Dampfturbine ein Dampfturbinen-Leistungsregler zugeordnet, und dem Gasturbinen-Leistungsregler und dem Dampfturbinen-Leistungsregler wird der jeweilige Sollwert mit einem jeweiligen Abfahr-Sollwert-Verlauf vorgegeben, um die Gasturbine und die Dampfturbine zum im Wesentlichen gleichen Zeitpunkt entlastet sind. Dabei wird unter im Wesentlichen zum gleichen Zeitpunkt verstanden, dass ein Betrieb der Dampfturbine nicht zu Schäden und/oder einer Verkürzung der Lebensdauer führt. Es werden also für das Abfahren dem Gasturbinen-Leistungsregler und dem Dampfturbinen-Leistungsregler vom Normalbetrieb abweichende Sollwerte vorgegeben. Bei den Sollwerten kann es sich jeweils um eine Reihe von Werten abnehmender Größe handeln, die aufeinander abgestimmt sind und die nacheinander nach Ablauf einer jeweiligen vorbestimmten Zeitdauer auf den jeweiligen Regler aufgeschaltet werden. Die jeweiligen Regler bewirken dann eine Nachführung des jeweiligen Ist-Wertes entsprechend der jeweiligen Sollwerte.

Bevorzugt ist der Gasturbine ein Gasturbinen-Leistungsregler und der Dampfturbine ein Dampfturbinen-Leistungsregler zugeordnet, und die jeweilige Stellgröße des Gasturbinen-Leistungsreglers und des Dampfturbinen-Leistungsreglers wird jeweils mit einem Abfahr-Vorsteuer-Verlauf beaufschlagt, um die Gasturbine und die Dampfturbine zum im Wesentlichen gleichen Zeitpunkt entlastet sind. Der Abfahr-Vorsteuer-Verlauf kann jeweils eine Reihe von Werten abnehmender Größe aufweisen, die aufeinander abgestimmt sind und die nacheinander nach Ablauf einer jeweiligen vorbestimmten Zeitdauer auf den jeweiligen Regler aufgeschaltet werden. Es kann auch während des Abfahrens eine Vorsteuerung genutzt werden. Durch die Vorsteuerung wird die jeweilige Stellgröße zusätzlich mit einem Wert beaufschlagt, der unabhängig von den Zuständen der Regelstrecke ist. Die Vorsteuerung ermöglicht auf einfache Weise die Berücksichtigung des aufgrund des Sollwertverlaufs zu erwartenden Stellgrößen-Bedarfs. Da sie eine zusätzliche Steuerung ist gefährdet sie nicht die Stabilität der Regelstrecke.

Durch eine geeignete Umsetzung der Soll-Größe zur vorgesteuerten Stellgröße lässt eine dynamische Regelung ohne negative Auswirkungen auf die Regelkreisstabilität aufbauen. Die Umsetzung von Soll- zu Stellgröße erfolgt derart, dass eine aufeinander folgende Reihe abnehmender Sollwerte eine Reihe aufeinander folgender Stellgrößen zur Folge hat.

Ferner gehören zur Erfindung ein Computerprogrammprodukt zum Durchführen eines derartigen Verfahrens, ein derartiges GuD-Kraftwerk sowie ein Abfahreinrichtung für ein derartiges GuD-Kraftwerk.

Im Folgenden wird eine bevorzugte Ausführungsform des erfindungsgemäßen Verbindungselements anhand der beigefügten schematischen Zeichnungen erläutert. Es zeigt:
- Fig. 1: eine schematische Darstellung eines GuD-Kraftwerks,
- Fig. 2: eine schematische Darstellung einer Reglerstruktur für das in Fig. 1 dargestellte GuD-Kraftwerk,
- Fig. 3: eine schematische Darstellung einer weiteren Reglerstruktur für das in Fig. 1 dargestellte GuD-Kraftwerk,
- Fig. 4: eine schematische Darstellung einer Steuerungsstruktur für das in Fig. 1 dargestellte GuD-Kraftwerk, und
- Fig. 5: eine schematische Darstellung des Drehzahl- und Blockleistungsverlaufs des in Fig. 1 dargestellten GuD-Kraftwerks während des Abfahrens.

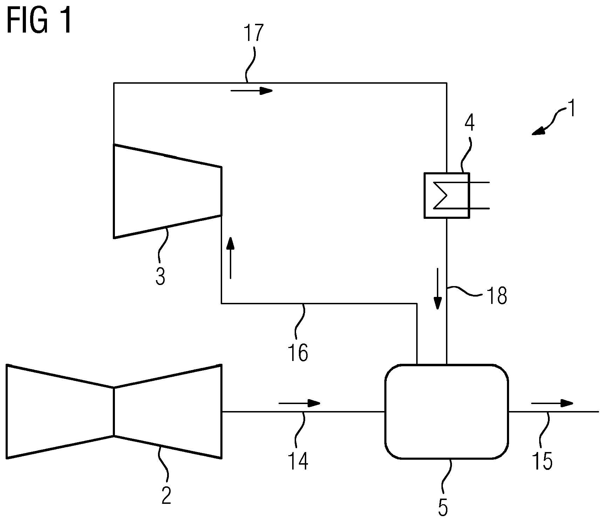

Es wird zunächst auf die Fig. 1 Bezug genommen.

In Fig. 1 ist ein GuD-Kraftwerk 1 dargestellt.

Das GuD-Kraftwerk 1 weist im vorliegenden Ausführungsbeispiel eine Gasturbine 2, eine Dampfturbine 3, einen Kondensator 4 und einen Kessel 5 auf.

Das GuD-Kraftwerk 1 kann als Mehrwellenanlage (engl. Multishaft) ausgebildet sein, bei dem die Gasturbine 2 und die Dampfturbine 3 jeweils einen Generator (nicht dargestellt) antreiben. Alternativ kann das GuD-Kraftwerk 1 auch als Einwellenanlage (engl. singleshaft) ausgebildet sein, bei der die Gasturbine 2 und die Dampfturbine 3 sowie ein Generator aus einer gemeinsamen Welle sind, wobei zusätzlich eine selbstsynchronisierenden Überholkupplung zum Abkuppeln vorgesehen sein kann.

Im Normalbetrieb wird der Gasturbine 2 Luft und Gas zugeführt. Die heißen Abgase der Gasturbine 2 werden über eine Abgasleitung 14 dem Kessel 5 zur Erzeugung von Wasserdampf zugeführt und über einen Auslass 15 abgeführt. Über eine Dampfleitung 16 wird Dampf aus dem Kessel 5 der Dampfturbine 3 zugeführt und dort entspannt. Über eine weitere Dampfleitung 17 wird der entspannte Dampf dem Kondensator 4 zugeführt, von dem Kondensat dann dem Kessel 5 über eine Kondensatleitung 18 zugeführt wird.

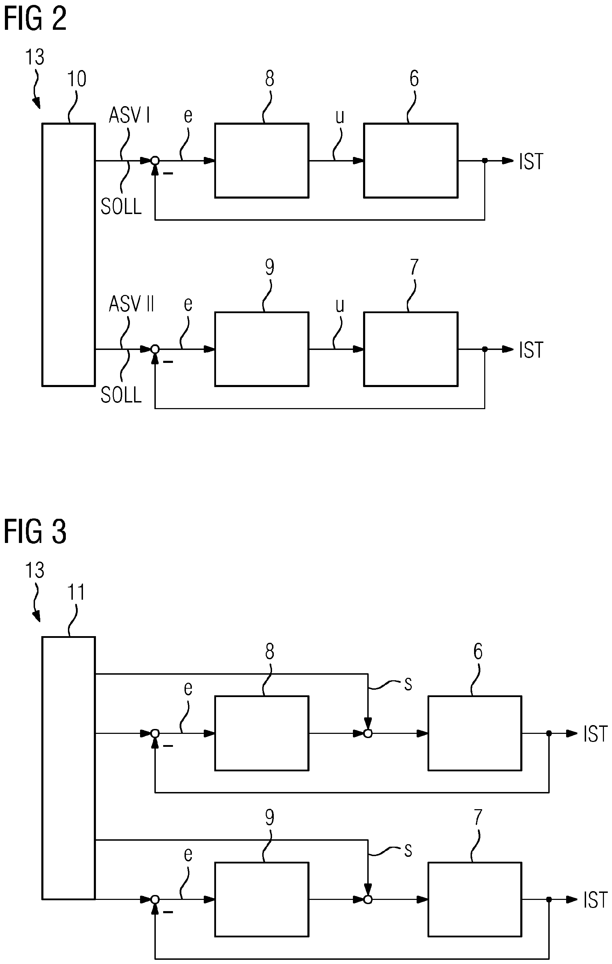

Es wird nun zusätzlich auf Fig. 2 Bezug genommen.

Dargestellt ist eine Reglerstruktur für das in Fig. 1 dargestellte GuD-Kraftwerk 1.

Die Reglerstruktur weist einen Gasturbinen-Leistungsregler 8 und einen Dampfturbinen-Leistungsregler 9 auf, wobei der Gasturbinen-Leistungsregler 8 der Gasturbine 2 - in Fig. 2 symbolisiert durch die Regelstrecke-Gasturbine 6 und der Dampfturbinen-Leistungsregler 9 der Dampfturbine 3 - in Fig. 2 symbolisiert durch die Regelstrecke-Dampfturbine 7 zugeordnet ist.

Wie an sich bekannt, wird die Ausgangsgröße der Gasturbine 2 und der Dampfturbine 3 als jeweiliger Ist-Wert IST erfasst, eine Regeldifferenz aus einem jeweiligen Soll-Wert SOLL sowie Ist-Wert IST gebildet und als Regelabweichung e dem jeweiligen Gasturbinen-Leistungsregler 8 und Dampfturbinen-Leistungsregler 9 zugeführt. Der jeweilige Gasturbinen-Leistungsregler 8 und Dampfturbinen-Leistungsregler 9 liefert dann eine jeweilige Stellgröße u, mit der die jeweilige Regelstrecke-Gasturbine 6 und Regelstrecke-Dampfturbine 7 beaufschlagt wird, um so eine gewünschte Leistung zu gewährleisten.

Während eines Abfahrens wird eine Abfahreinrichtung 13 aktiv. Die Abfahreinrichtung 13 ist in dem in Fig. 2 dargestellten Ausführungsbeispiel als Sollwertvorgabe-Vorrichtung 10 ausgebildet.

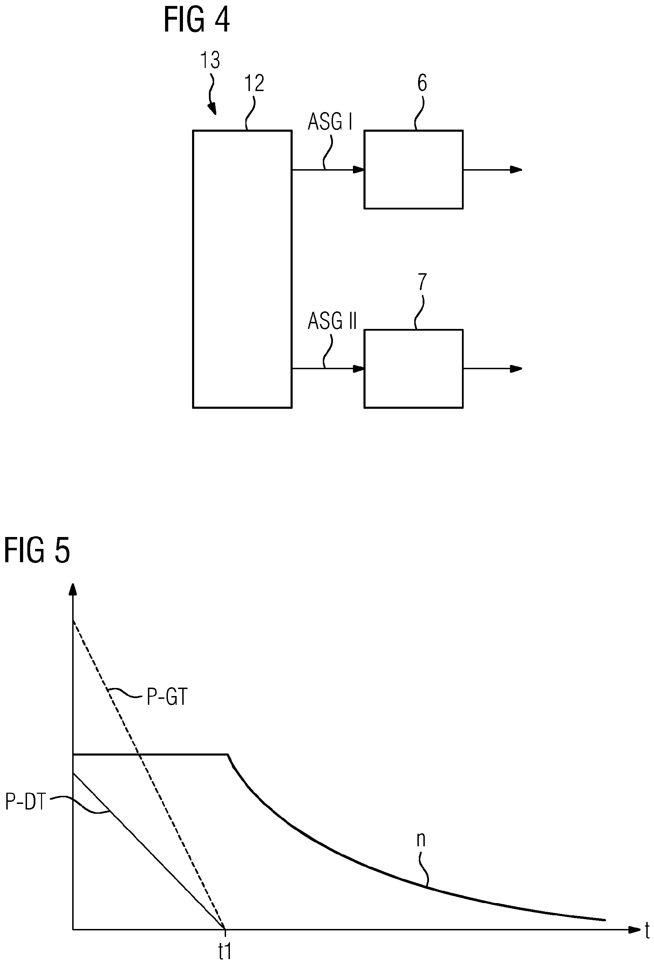

Die Abfahreinrichtung 13 schaltet einen Abfahr-Sollwert-Verlauf ASV I für die Gasturbine 2 und einen Abfahr-Sollwert-Verlauf ASV II für die Dampfturbine 3 als jeweilige Sollwerte auf den Gasturbinen-Leistungsregler 8 und Dampfturbinen-Leistungsregler 9. Dabei weisen der Abfahr-Sollwert-Verlauf ASV I für die Gasturbine 2 und der Abfahr-Sollwert-Verlauf ASV II für die Dampfturbine 3 im vorliegenden Ausführungsbeispiel jeweils eine Reihe von Werten abnehmender Größe auf, die aufeinander abgestimmt sind und die nacheinander nach Ablauf einer vorbestimmten Zeitdauer auf den Gasturbinen-Leistungsregler 8 und Dampfturbinen-Leistungsregler 9 aufgeschaltet werden, um so die Gasturbine 2 und die Dampfturbine 3 zum im Wesentlichen gleichen Zeitpunkt t1 (siehe Fig. 5) entlastet sind.

Es wird nun zusätzlich auf Fig. 3 Bezug genommen.

Dargestellt ist eine weitere Reglerstruktur für das in Fig. 1 dargestellte GuD-Kraftwerk 1.

Die in Fig. 3 dargestellte Reglerstruktur weist eine Abfahreinrichtung 13 auf, die im vorliegenden Ausführungsbeispiel auch als eine Vorsteuer-Vorrichtung 11 ausgebildet sein kann.

Die Abfahreinrichtung 13 schaltet durch ihren jeweiligen Abfahr-Sollwert-Verlauf ASVI, ASV II auch einen Abfahr-Vorsteuer-Verlauf AVV I für die Gasturbine 2 und einen Abfahr-Vorsteuer-Verlauf AVV II für die Dampfturbine 3 als jeweilige Stellwerte s direkt auf die Gasturbine 2 bzw. die Regelstrecke-Gasturbine 6 und die Dampfturbine 3 bzw. die Regelstrecke-Dampfturbine 7. Dabei weisen der Abfahr-Vorsteuer-Verlauf AVV I für die Gasturbine 2 und der Abfahr-Vorsteuer-Verlauf AVV II für die Dampfturbine 3 im vorliegenden Ausführungsbeispiel jeweils eine Reihe von Werten abnehmender Größe auf, die aufeinander abgestimmt sind und die nacheinander aufgeschaltet werden, um so die Gasturbine 2 und die Dampfturbine 3 zum im Wesentlichen gleichen Zeitpunkt t1 (siehe Fig. 5) entlastet sind.

Es wird nun zusätzlich auf Fig. 4 Bezug genommen.

Dargestellt ist Steuerungsstruktur für das in Fig. 1 dargestellte GuD-Kraftwerk 1.

Die in Fig. 4 dargestellte Steuerungsstruktur weist eine Abfahreinrichtung 13 auf, die im vorliegenden Ausführungsbeispiel als ein Steuergerät 12 ausgebildet ist und eine Gasturbinen-Steuereinheit 13 zum Steuern der Gasturbine 2 und eine Dampfturbinen-Steuereinheit 14 zum Steuern der Dampfturbine 3 aufweist.

Die Abfahreinrichtung 13 schaltet einen Abfahr-Stellgrößen-Verlauf ASG I auf die Gasturbine 2 bzw. die Regelstrecke-Gasturbine 6 und einen Abfahr-Stellgrößen-Verlauf ASG I auf die Dampfturbine 3 bzw. die Regelstrecke-Dampfturbine 7, um so die Gasturbine 2 und die Dampfturbine 3 zum im Wesentlichen gleichen Zeitpunkt t1 (siehe Fig. 5) entlastet sind.

Es wird nun zusätzlich auf Fig. 5 Bezug genommen.

Dargestellt ist in schematischer Form der Drehzahlverlauf n und der Blockleistungsverlaufs P des GuD-Kraftwerks 1.

Ein Abfahren beginnt zum Zeitpunkt t0. Somit wird zum Zeitpunkt die Abfahreinrichtung 13 aktiv.

Wenn die Abfahreinrichtung 13 als Sollwertvorgabe-Vorrichtung 10 ausgebildet ist schaltet die Abfahreinrichtung 13 den Abfahr-Sollwert-Verlauf ASV I für die Gasturbine 2 und den Abfahr-Sollwert-Verlauf ASV II für die Dampfturbine 3 als jeweilige Sollwerte auf den Gasturbinen-Leistungsregler 8 und Dampfturbinen-Leistungsregler 9, um so die Gasturbine 2 und die Dampfturbine 3 zum im Wesentlichen gleichen Zeitpunkt t1 entlastet sind.

Wenn die Abfahreinrichtung 13 als eine Vorsteuer-Vorrichtung 11 ausgebildet ist schaltet die Abfahreinrichtung 13 einen Abfahr-Vorsteuer-Verlauf AVV I für die Gasturbine 2 und einen Abfahr-Vorsteuer-Verlauf AVV II für die Dampfturbine 3 als jeweilige Stellwerte direkt auf die Gasturbine 2 bzw. die Regelstrecke-Gasturbine 6 und die Dampfturbine 3 bzw. die Regelstrecke-Dampfturbine 7, um so die Gasturbine 2 und die Dampfturbine 3 zum im Wesentlichen gleichen Zeitpunkt t1 entlastet sind.

Wenn die Abfahreinrichtung 13 als ein Steuergerät 12 ausgebildet ist schaltet die Abfahreinrichtung 13 einen Abfahr-Stellgrößen-Verlauf ASG I auf die Gasturbine 2 bzw. die Regelstrecke-Gasturbine 6 und einen Abfahr-Stellgrößen-Verlauf ASG I auf die Dampfturbine 3 bzw. die Regelstrecke-Dampfturbine 7, um so die Gasturbine 2 und die Dampfturbine 3 zum im Wesentlichen gleichen Zeitpunkt t1 entlastet sind.

So kann innerhalb eines Zeitfensters, das sich vom Zweitpunkt t0 bis zum Zeitpunkt t1 erstreckt, d.h. sich von Beginn des Abfahrvorgangs bis zum Abfall der Dampftemperatur auf einen unteren Grenzwert erstreckt, die Gastturbine 2 zeitgleich mit der Dampfturbine 3 abgefahren werden. Ferner fällt innerhalb des Zeitfensters zwischen den Zeitpunkten t0 bis T1 der Blockleistungsverlaufs P auf null.

So kann das Abfahren beschleunigt werden. Von Vorteil, aber keine Voraussetzung ist hierbei, dass die Gasturbine 2 eine hohe Dynamik aufweist.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betreiben eines GuD-Kraftwerks (1),
wobei das GuD-Kraftwerk (1) eine Gasturbine (2) und eine Dampfturbine (3) aufweist, und wobei zum Abfahren der Gasturbine (2) und der Dampfturbine (3) die Gasturbine (2) und die Dampfturbine (3) derart betrieben werden, dass die Gasturbine (2) und die Dampfturbine (3) zum im Wesentlichen gleichen Zeitpunkt (t1) entlastet sind.

2. Verfahren nach Anspruch 1,
wobei der Gasturbine (2) ein Gasturbinen-Leistungsregler (7) und der Dampfturbine (3) ein Dampfturbinen-Leistungsregler (8) zugeordnet ist, und wobei dem Gasturbinen-Leistungsregler (7) und dem Dampfturbinen-Leistungsregler (8) der jeweilige Sollwert mit einem jeweiligen Abfahr-Sollwert-Verlauf (ASV I, ASV II) vorgegeben wird, um die Gasturbine (2) und die Dampfturbine (3) zum im Wesentlichen gleichen Zeitpunkt (t1) entlastet sind.

3. Verfahren nach Anspruch 1,
wobei der Gasturbine (2) ein Gasturbinen-Leistungsregler (7) und der Dampfturbine (3) ein Dampfturbinen-Leistungsregler (8) zugeordnet ist, und wobei die jeweilige Stellgröße des Gasturbinen-Leistungsreglers (7) und des Dampfturbinen-Leistungsreglers (8) jeweils mit einem Abfahr-Vorsteuer-Verlauf (AVV I, AVV II) beaufschlagt werden, um die Gasturbine (2) und die Dampfturbine (3) zum im Wesentlichen gleichen Zeitpunkt (t1) entlastet sind.

4. Verfahren nach Anspruch 1,
wobei mit einer Abfahreinrichtung (13) jeweils der Gasturbine (2) und der Dampfturbine (3) jeweils ein Abfahr-Stellgrößen-Verlauf (ASG I, ASG II) vorgegeben wird, um die Gasturbine (2) und die Dampfturbine (3) zum im Wesentlichen gleichen Zeitpunkt (t1) entlastet sind.

5. Computerprogrammprodukt,
mit Komponenten, die dazu ausgebildet sind, ein Verfahren nach einem der Ansprüche 1 bis 4 auszuführen.

6. GuD-Kraftwerk (1) mit einer Gasturbine (2) und einer Dampfturbine (3),
wobei das GuD-Kraftwerk (1) derart betrieben werden kann, dass die Gasturbine (2) und die Dampfturbine (3) zum im Wesentlichen gleichen Zeitpunkt (t1) entlastet sind.

7. GuD-Kraftwerk (1) nach Anspruch 6,
wobei der Gasturbine (2) ein Gasturbinen-Leistungsregler (7) und der Dampfturbine (3) ein Dampfturbinen-Leistungsregler (8) zugeordnet ist, und wobei eine Abfahreinrichtung (13) vorgesehen ist, die dem Gasturbinen-Leistungsregler (7) und dem Dampfturbinen-Leistungsregler (8) den jeweiligen Sollwert gemäß einem jeweiligen Abfahr-Sollwert-Verlauf (ASV I, ASV II) vorgibt, um die Gasturbine (2) und die Dampfturbine (3) zum im Wesentlichen gleichen Zeitpunkt (t1) entlastet sind.

8. GuD-Kraftwerk (1) nach Anspruch 6,
wobei der Gasturbine (2) ein Gasturbinen-Leistungsregler (7) und der Dampfturbine (3) ein Dampfturbinen-Leistungsregler (8) zugeordnet ist, und wobei eine Abfahreinrichtung (13) vorgesehen ist, die den Gasturbinen-Leistungsregler (7) und den Dampfturbinen-Leistungsregler (8) jeweils mit einem Abfahr-Vorsteuer-Verlauf (AVV I, AVV II) beaufschlagt, um die Gasturbine (2) und die Dampfturbine (3) zum im Wesentlichen gleichen Zeitpunkt (t1) entlastet sind.

9. GuD-Kraftwerk (1) nach Anspruch 6,
wobei eine Abfahreinrichtung (13) vorgesehen ist, die jeweils einen Abfahr-Stellgrößen-Verlauf (ASG I, ASG II) vorgibt, um die Gasturbine (2) und die Dampfturbine (3) zum im Wesentlichen gleichen Zeitpunkt (t1) entlastet sind.

10. Abfahreinrichtung (13) für ein GuD-Kraftwerk (1) nach einem der Ansprüche 6 bis 9.
